(19) **Europäisches Patentamt**
**European Patent Office**
**Office européen des brevets**

(11) **EP 1 601 171 B1**

(12) **EUROPEAN PATENT SPECIFICATION**

(45) Date of publication and mention
of the grant of the patent:
**30.04.2008   Bulletin 2008/18**

(51) Int Cl.:
*H04M 1/60* (2006.01)

(21) Application number: **04102416.7**

(22) Date of filing: **28.05.2004**

(54) **System And Method For Adjusting An Audio Signal**

System und Verfahren zur Einstellung eines Audiosignals

Système, procédé pour régler un signal audio

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(43) Date of publication of application:
**30.11.2005   Bulletin 2005/48**

(73) Proprietor: **Research In Motion Limited
Waterloo, Ontario N2L 3W8 (CA)**

(72) Inventors:
• **Forrester, Chris
N2L 3W8, Waterloo (CA)**
• **Hawker, Larry
N2L 3W8, Waterloo (CA)**
• **Nguyen, Bao
N2L 3W8, Waterloo (CA)**

(74) Representative: **Rickard, David John et al
26 Mallinson Road
London SW11 1BP (GB)**

(56) References cited:
**EP-A- 0 674 415          EP-A- 0 767 570
WO-A-20/04004409      US-A- 4 721 923**

## Description

The invention relates to a system and method for adjusting an audio signal, in particular an audio signal generated by a speaker in a communication device.

In electronics, an audible audio signal is generated by generating an electrical signal representative of the audible signal and feeding that signal to a speaker. Various adjustments can be applied to the audio signal, including changing its volume, pitch and frequency, using known analog and digital signal processing techniques.

For a communication device, such as a cellular phone, a current feature provides a volume setting which selectively increases and decreases volume of an audio signal generated by the device's speaker. For a user of a cellular phone who has hearing difficulties, when he talks on the phone, the phone's volume setting may be placed at a "high" volume level, to increase the audio signal of the person calling the user. Alternatively, the volume setting may be set at a sufficiently high level to enable the user to listen to the audio signal generated by the cellular phone without requiring that the cellular phone be placed immediately near the user's ear. This setting is useful when the user checks his voice mail system. Therein, with a high volume level, he can hold the cellular phone in front of him and listen to his messages while still being able to see the keypad of the cellular phone. This enables him to see the keypad and quickly access the appropriate keys as he navigates through the commands of the voice mail system.

Increasing the volume on a cellular phone past a threshold level introduces distortion to the generated audio signal, thereby making it difficult to understand.

Known signal processing techniques provide dynamic monitoring of audio signals to dynamically recognize when an audio signal has excessive distortion and then provide a corrective shaping signal to it to reduce the distortion. Such techniques work very well, but use sophisticated evaluation techniques which require a significant amount of signal processing capabilities to implement them in real time. Smaller devices, such as cellular phones, have limited signal processing capabilities, and may not have sufficient capabilities to implement these techniques.

EP0767570 discloses a system and method for adjusting the audio output signal of a communications device using an equaliser having a variable frequency response. The frequency response of the equaliser is changed in accordance with one or more control parameters such as the device's sound volume as set by a user, ambient noise level measured through the device's microphone, information about auxiliaries connected to the device and measurements describing the quality of a wireless connection to the device. When one or more of the control parameters is changed such as a user effected change in the device's audio output signal volume, control information of the equaliser is changed thereby varying its frequency response. A digital signal processor (DSP) controls the equaliser in response to changes in any of the control parameters to so that audio output signal components at certain frequencies are attenuated or amplified according to existing environmental and operating conditions of the communications device.

US4721923 discloses a basic audio speech amplifier circuit where a high pass filter is selectively applied to an audio signal when the signal is being boosted to a level of distortion. In order to compensate for the loss of energy in the signal produced by the attenuator, the circuit provides a DC boost of the output voltage signal prior to filtering.

WO2004/004409 discloses a system and method for adjusting the audio output signal of a communications device using an equaliser to at least partially compensate for a non-flat frequency response of a speaker through frequency selective attenuation. The system includes means for decreasing frequency selective attenuation when a maximum amplification by an amplifier has already been reached resulting in zero attenuation at all frequencies when a maximum audio output signal volume has been reached.

There is a need for a system and method of adjusting an audio output signal in an efficient manner.

## GENERAL

In a first aspect, the present invention provides a method of adjusting an output audio signal of a communication device, said method comprising performing the steps in said communication device of: obtaining a digitized signal of a signal received at said device, said received signal encoding an audio signal; monitoring for a request to increase a current volume setting to an increased volume level for said output audio signal; and generating an adjusted version of said digitized signal to implement said increased volume level utilizing a digital signal processor (DSP); a processing filter defined in said DSP; and said digitized signal; the method being characterized in that it comprises the steps of: upon determining that said increased volume level is within a predetermined quality threshold, generating an adjusted version of said digitized signal to implement said increased volume level utilizing a predetermined first set of adjustment parameters comprising filter coefficients for said DSP processing filter stored in a memory of said communication device; upon determining that said increased volume level would cause said output audio signal to exceed said predetermined quality threshold, generating an adjusted version of said digitized signal to have an acceptable characteristic for said quality threshold while implementing said increased volume level utilizing a predetermined second set of adjustment parameters comprising filter coefficients for said DSP processing filter stored in said memory of said communication device that provides different output levels for said output audio signal at different frequencies as compared to said first set of adjustment parameters; converting said adjusted version of said signal to an adjusted analog audio signal; and providing said adjusted analog audio signal to a speaker in said device.

The characteristic may be a volume level of the output audio signal; said quality threshold may be an upper boundary of an audio frequency pass mask; said acceptable characteristic may be a frequency response within an acceptable boundary of said audio frequency pass mask; said filter may be a finite impulse response (FIR) filter; and said first and second sets of adjustment parameters may each be a respective set of coefficients for said FIR filter.

A second set of said adjustment parameters may provide a set of coefficients to adjust said audio signal to comply with said audio frequency pass mask and/or adjust said audio signal to roll off lower frequency components in said audio signal and to further adjust said audio signal to boost higher frequency components in said audio signal.

In a second aspect, the present invention provides a circuit for adjusting an output audio signal of a communication device, said circuit comprising: a module for receiving a signal encoding an audio signal and converting said signal to a digitized signal; a module to accept a request for an increase in a current volume setting to an increased volume level for said output audio signal; a microprocessor adapted to detect when said request for said increase occurs and to generate an adjusted version of digitized signal to implement said increased volume level utilizing a digital signal processor (DSP); a filter; and said digitized signal; and a module to convert said adjusted version of the digitized signal to an analog audio signal and to provide said analog audio signal to a speaker; the circuit being characterized in that said DSP is adapted to determine if said request for said increase at said increased volume level would generate an audio output signal which exceeds a predetermined quality threshold, and, upon determining that said increased volume is within said quality threshold, to select a first set of adjustment parameters comprising filter coefficients for said DSP processing filter stored in a memory of said communication device to be used by said digital signal processor to generate an adjusted version of said digitized signal to implement said increased volume; and, upon determining that said increased volume would cause said output audio signal to exceed said quality threshold, to select a second set of adjustment parameters comprising filter coefficients for said DSP processing filter stored in said memory of said communication device to be used by said digital signal processor to generate another adjusted version of said digitized signal that provides different output levels for said digitized signal at different frequencies as compared to said adjusted version to have an acceptable characteristic for said quality threshold while implementing said increased volume.

The characteristic may be a volume level of the output audio signal; said quality threshold may be an upper boundary of an audio frequency pass mask; said acceptable characteristic may be a frequency response within an acceptable boundary of said audio frequency pass mask; said filter may be a finite impulse response (FIR) filter; and said first and second sets of adjustment parameters may each be a respective set of coefficients for said FIR filter. The audio frequency pass mask may be compliant with GSM standards.

A second set of said adjustment parameters may comprise a set of coefficients to adjust said audio signal to comply with said audio frequency pass mask and/or adjust said audio signal to roll off lower frequency components in said audio signal and to further adjust said audio signal to boost higher frequency components in said audio signal.

In a third aspect, the present invention provides a communications device including a system in accordance with the second aspect.

In a fourth aspect, the present invention provides a telecommunications network including a communications device in accordance with the third aspect.

In a fifth aspect, the present invention provides a machine readable medium comprising computer code means executable in a microprocessor of a system in accordance with the second aspect for implementing the method in accordance with the first aspect.

In other aspects, various combinations of sets and subsets of the above aspects are provided.

BRIEF DESCRIPTION OF THE DRAWINGS

The foregoing and other aspects of the invention will become more apparent from the following description of specific embodiments thereof and the accompanying drawings which illustrate, by way of example only, the principles of the invention. In the drawings, where like elements feature like reference numerals (and wherein individual elements bear unique alphabetical suffixes):

Figure 1 is a block diagram of a communication device associated with an embodiment;

Figure 2 is a schematic diagram of operational elements associated with the communication device of Fig. 1;

Figure 3 is a frequency response curve illustrating responses for selected output levels of audio signals produced by the communication device of Fig. 1;

Figure 4 is a harmonic distortion curve illustrating distortion levels for selected output levels of audio signals produced by the communication device of Fig. 1; and

Figure 5 is a flow chart of an algorithm used for adjusting signals used by the operational elements of Fig. 2.

Description of Preferred Embodiments

The description which follows, and the embodiments described therein, are provided by way of illustration of an example, or examples, of particular embodiments of the principles of the present invention. These examples are provided for the purposes of explanation, and not limitation, of those principles and of the invention. In the description, which follows, like parts are marked throughout the specification and the drawings with the same respective reference numerals.

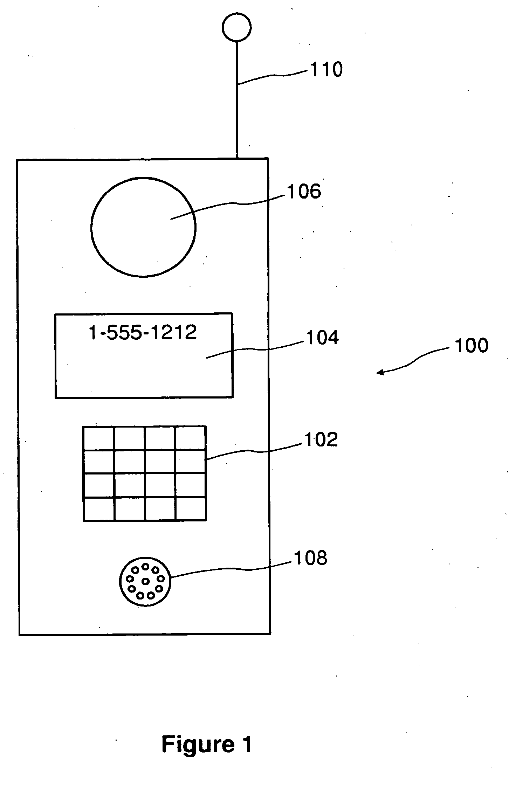

Referring to Figure 1, communication device 100 is shown. User of communication device 100 can establish a call with another person using another device which can communicate with device 100. Device 100 may be a telephone, cordless telephone, cellular phone, voice-enabled personal digital assistant or any device providing electronic voice communications. The other person may be using a device connected to a PSTN network (not shown). Therein, communications may be established through a cellular network (not shown) associated with device 100 and a PSTN network associated with the device of the other person. Alternatively, the other device may be a voice mail system.

The main interface elements of communication device 100 for its user include: keypad 102, display 104, speaker 106 and microphone 108. Speaker 106 generates all audible signals received from the other device. Microphone 108 receives all audio signals from the user as he speaks to the other person. Speaker 106 can be any type of speaker having appropriate dimensions and performance characteristics to produce an audio signal for device 100. For a wireless communication interface, antenna 110 is provided to receive and transmit wireless signals for device 100.

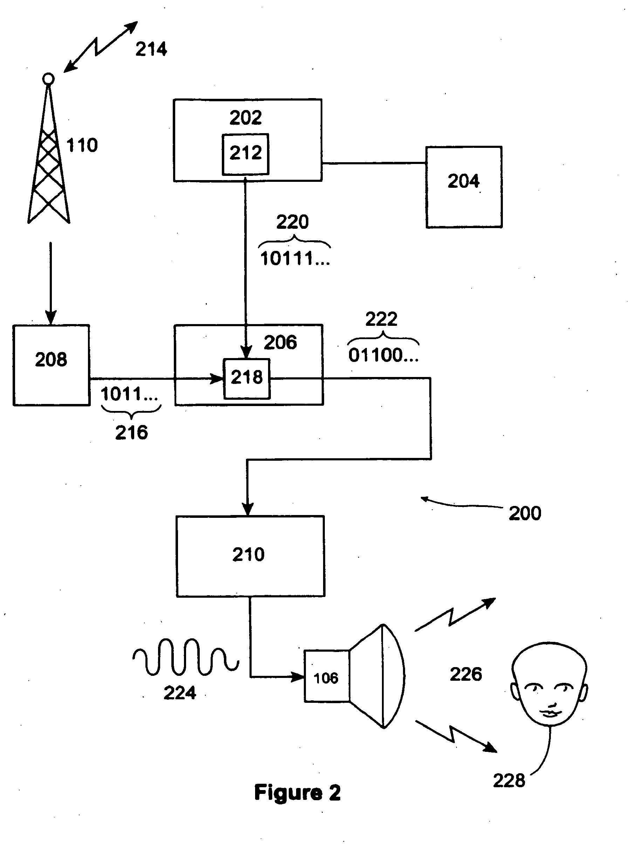

Referring to Fig. 2, further detail on functional aspects of elements in device 100 are provided. Therein, circuit 200 provides facilities to receive and transmit audio signals to and from device 100. Circuit 200 comprises microprocessor 202, non-volatile memory 204, digital signal processing (DSP) module 206, radio module 208, antenna 110, coder/decoder (CODEC) 210 and speaker 106.

Microprocessor 202 is the main control element for device 100. Algorithm 212 is a program operating on microprocessor 202, effectively providing control for many operations of device 100, including call control, display control and power management. Microprocessor 202 has access to memory 204, which is used to store routines, variables and data used by algorithm 212. In the embodiment, microprocessor 202 is a commercially available microcontroller, such as a microcontroller available from ARM, Motorola and Intel. Memory 204 is a flash memory device. Other technologies of non-volatile storage devices known in the art can be used. A representative DSP 206 is commercially available from various manufacturers, including Texas Instruments and Analog Devices. A representative CODEC 210 is commercially available from Texas Instruments and Analog Devices. A representative speaker 106 is commercially available from Philips and Foster.

For device 100, antenna I 10 provides a wireless interface to receive and transmit voice signals encoded in radio frequencies to other devices. Antenna 110 is connected to radio module 208, which converts received wireless signals 214 received by antenna 110 into electrical signals, which can then be used by the other elements in circuit 200. In particular, module 208 converts received wireless signals 214 into digital data stream 216, which is a sufficient representation of the audio signal encoded in wireless signal 214. Similarly, data representing digitized audio signals spoken by the user and received by microphone 104 is received by radio module 208 then converted into an electrical signal for antenna 110, which then converts the electrical signal to a radio signal and transmits it to the air. Radio module 208 comprises internal circuits and routines known in the art of radio signal processing.

Digital data stream 216 is provided from radio module 208 to DSP 206, which is programmed to selectively shape the digitized voice signals to effect a required acoustic response properties for sounds meant for reproduction on speaker 106. At the heart of DSP 206 is filter 218, which provides an algorithm to process signal inputs (such as data 216) and apply set adjustment coefficients to aspects of the inputs, to produce output data stream 222. The adjustment coefficients are preferably provided by data 220 from microprocessor 202 as another set of inputs to DSP 206. With all of the input and coefficient information, DSP 206 uses its internal specialized DSP circuits to efficiently generate output data stream 222.

Thereafter output data stream 222 is provided to CODEC 210, which converts stream 216 to analog electrical signal 224, and then provides the electrical signal to speaker 106. Speaker 106 converts electrical signal 224 into audio signal 226, which can be heard by user 228.

It will be appreciated that other embodiments and processes also will provide an equivalent result of converting and processing a received radio frequency-based signal into an audible signal.

Further detail on specific adjustment coefficients provided by the embodiment is now provided. In the current regulatory environment, cellular phones and other wireless communication devices, such as device 100, generally must meet minimal operating performance specifications relating to the quality of audio signals produced by its speaker. Such audio specifications include signal frequency response and loudness rating standards.

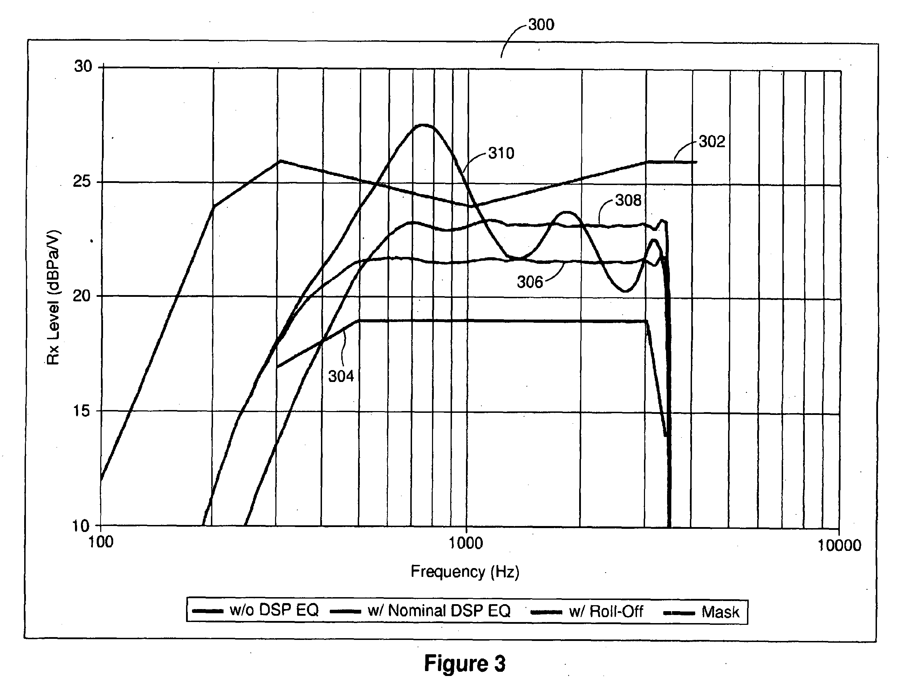

In Fig. 3, graph 300 is a receive frequency response graph defined under Globale Systems Mobile (GSM) standards. The receive frequency response standard mandates that the measured frequency response of a received signal (which is reproduced on speaker 106) falls within a specific mask (measured in dB) for a given frequency range.

Specifically, the GSM standard dictates that for a communication device operating at the nominal volume setting, the frequency response of audio signals produced by its speaker must fall between a floating template defined by upper boundary 302 and lower boundary 304. Upper boundary 302 is a shaped frequency response curve defining acceptable and unacceptable response levels for given frequencies. For upper boundary 302, at a given frequency if the measured response level is above upper boundary 302, then the measured response fails the specification. Similarly, lower boundary 304 is a shaped frequency response curve defining acceptable and unacceptable response levels for given frequencies. For lower boundary 304, at a given frequency if the measured response level is below lower boundary 304, then the measured response fails the specification. The loudness standard is known as the Receive Loudness Rating (RLR). Specifically, the RLR dictates that for a communication device operating at a nominal volume setting, the RLR must be within a certain range. The calculation procedures for RLR are known in the art.

Frequency response curves 306, 308 and 310 are exemplary responses generated by speaker 106. Each curve represents speaker 106 being driven at one level but having different filter parameters being applied thereto by filter 218 and algorithm 212.

Frequency response curve 310 is the acoustic frequency response of speaker 106 with no filtering (i.e., with a flat filter response). Since the region of curve 310 about 650 Hz is not compliant with the frequency response mask specification, its audio drive signal requires equalization or shaping to make it compliant.

Frequency response curve 306 is the acoustic frequency response of speaker 106 with filter parameters applied for the nominal volume setting to provide compliance with the frequency response mask specification. As seen, curve 306 is compliant with the frequency response mask specification throughout its entire frequency range.

Frequency response curve 308 is the acoustic frequency response of speaker 106 for a different set of filter parameters. The region of curve 308 about 300 Hz is not compliant with the frequency response mask specification. Curve 308 shows that speaker 106 has lower output levels at the lower frequencies compared to curve 306. This is due to different shaping of the audio signal characteristic of the different set of filter parameters. Curve 308 has higher output levels than curve 306 in the frequency region above about 520 Hz. In that region, output values for that speaker have been boosted to compensate for the loss in loudness associated with the low frequency roll-off of the output level of curve 308 relative to curve 306. This compensation ensures that the user experiences the expected change in loudness, as determined by the Receive Loudness Rating (RLR), when the volume setting is switch from one volume level to its adjacent volume level and when filter parameters are switched.

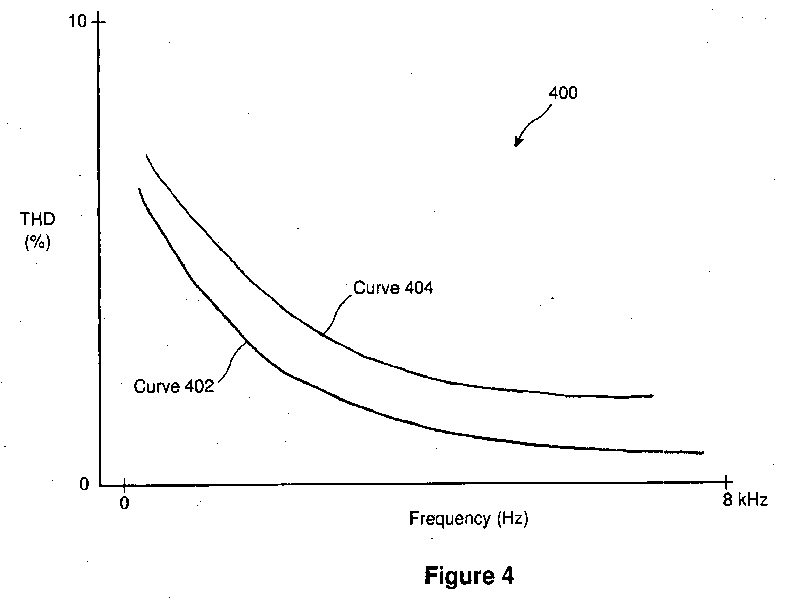

Referring to Fig. 4, for a given speaker producing a signal at a given volume level, a related issue to frequency response is the amount of distortion present in the signal. Generally, due to a speaker's inherent operational characteristics, as the volume of a signal reproduced on the speaker is increased, distortion in the audio signal increases. Limitations in the speaker include its operating frequency range and power handling capabilities. Often, for a given speaker having a given frequency operating range, signals in the lower frequencies are distorted first, due to physics relating to transducers. However, a speaker may also have sensitive elements for creating signals having higher frequencies. Accordingly, if the sensitive elements are damaged by high voltage signals, then the signals in the higher frequencies become distorted. Graph 400 shows total harmonic distortion (as a percentage) on the y-axis measured against a frequency range (in Hz) on the x-axis.

Curve 402 shows a representative curve of total harmonic distortion of a speaker driven at its nominal operating level. At its nominal operating level, it may have a frequency response as represented by curve 306 (Fig. 3).

When the speaker is driven at a higher loudness level, which is outside its nominal operating range, it may begin to distort the reproduced signals. Representative distortion levels are shown in curve 404. As seen in curve 404, distortion levels are higher in the lower frequency range than the higher frequency range. Accordingly, in order to more effectively reduce the distortion, it is advantageous to roll-off the lower frequencies in the signal.

Using frequency domain analysis techniques, in order to control the distortion, the embodiment effectively examines the current volume level of the audio signal being reproduced on speaker 106 (Fig. 2), and if the volume level exceeds a certain threshold, then certain aspects of the audio signal are attenuated to reduce the distortion. If the volume level is reduced to below the threshold, then the attenuation is removed. More specifically, when the volume level exceeds a predetermined threshold, device 100 effectively imposes a high-pass filter on the audio signal, thereby attenuating lower frequencies past a cut off band and not attenuating signals in frequencies past the cut off band. The shape and cut-off point of the high pass filter may be modified per different performance requirements. In other embodiments, low-pass filters, notch filters, bandpass filters, other types of filters or any combination of filters may be used.

For a given set of performance requirements, parameters must be established to set when a signal is attenuated and by how much. One method of identifying the characteristics is to measure the performance of the given speaker 106 under differing signal levels, by measuring its frequency response and distortion characteristics. The measurements are analyzed to identify volume levels which may produce excessive distortion and the associated frequency responses. Thereafter a cut-off volume level is selected. When the volume level of speaker 106 exceeds the cut-off volume, then signals are attenuated at certain frequencies. The identification of which frequencies require attenuation and what the attenuation amount should be is also determined by analyzing the measurements.

As an example, for speaker 106 operating at a given volume level, its frequency response is provided in graph 306 (Fig. 3) and its distortion level is provided in curve 404 (Fig. 4). To adjust the distortion characteristics of the audio signals generated at that given volume level, adjustments are made to the filter parameters to roll-off lower frequencies to produce curve 308, wherein curve 308 has a relatively flat response with upper boundary 302 and lower boundary 304. Curve 308 does fall outside lower boundary 304 in the lower frequencies; however, this may be an acceptable result. It will be appreciated that distortion of signal in curve 308 is lower than distortion of signals in curve 310.

While frequency domain analysis techniques are useful for identifying performance characteristics, time domain techniques may be used to implement a signal shaping algorithm. Signal shaping in the time domain allows use of DSP techniques to implement its shaping characteristics. Details regarding a digital implementation of the signal shaping is now provided.

Returning to Fig. 2, filter 218 is a basic block of DSP 206 and calculates attenuation values (if any) for signals sent to speaker 106. For filter 218, its frequency response in the frequency domain is governed by values of coefficients provided to its taps, as filter 218 processes data in the time domain. In programming these tap values, typically floating point numbers may be used. However, as filter 218 is implemented in hardware, the coefficients and the related data are represented as digital data in binary format. The operating guidelines of DSP 206 need to be followed to effect proper implementation of filter 218.

In the embodiment, a Finite Impulse Response (FIR) filter is used for filter 218. A FIR filter has an impulse response of finite duration. As is known in the art, the FIR filter uses a series of taps representing samples taken at different time intervals. The sampling rate for the embodiment is 8 kHz, providing a period of calculation of 125 us. This sampling rate is reasonable as the audio signals related to device 100 are in the telephone bandwidth of 0 to 3,400 Hz. In the embodiment, the FIR response uses 32 points. The mathematical structure of the FIR filter is the following difference equation:

$$y(n) = \sum_{i=0}^{N-1} [h(i) \times x(n-i)] \qquad \text{Equation (1)}$$

Where x(i) is the input, y(n) is the output, h(i) is the unit sample response of the filter and N is the number of taps of the filter.

To determine the coefficients for the FIR filter, several known techniques may be used. As noted above, one technique is to conduct frequency measurements and determine a given cut-off frequency and shaping curve. Subsequently, the frequency domain information regarding the shaping curve may be converted to a set of coefficients in the time domain, using known techniques readily available in signal processing simulation software.

In the embodiment, Table A lists two sets of coefficients defined for device 100. The values in Table A are stored in non-volatile memory 204 and accessed by algorithm 212. Set 1 provides a set of coefficients which equalizes the acoustic response so that it complies with the GSM mask. In operation, the shaping would convert a response found in curve 310 (Fig. 3) to a response found in curve 306. Set 2 provides a set of coefficients which rolls-off lower frequencies to control distortion. In operation, the shaping would convert curve 310 to curve 308. As an enhancement, the overall gain between the two sets is adjusted so that a change in volume from one level to its adjacent level still provides the same change in loudness level that the user expects (for example, a 3 dB change).

TABLE A

| Tap | Set 1 | Set 2 |
|---|---|---|
| 0 | 139 | 302 |
| 1 | -214 | -219 |
| 2 | 221 | 349 |
| 3 | -460 | -394 |
| 4 | 153 | 164 |
| 5 | -494 | -431 |
| 6 | -730 | -964 |
| 7 | 10 | -164 |

(continued)

| Tap | Set 1 | Set 2 |
|-----|-------|-------|
| 8 | -1145 | -1700 |
| 9 | 1666 | 1040 |
| 10 | 1356 | 541 |
| 11 | 919 | -481 |
| 12 | 611 | -836 |
| 13 | 455 | -1603 |
| 14 | 1047 | -875 |
| 15 | -1882 | -4470 |
| 16 | 28803 | 28803 |
| 17 | -1882 | -4470 |
| 18 | 1047 | -875 |
| 19 | 455 | -1603 |
| 20 | 611 | -836 |
| 21 | 919 | -481 |
| 22 | 1356 | 541 |
| 23 | 1666 | 1040 |
| 24 | -1145 | -1700 |
| 25 | 10 | -164 |
| 26 | -730 | -964 |
| 27 | -494 | -431 |
| 28 | 153 | 164 |
| 29 | -460 | -394 |
| 30 | 221 | 349 |
| 31 | -214 | -219 |

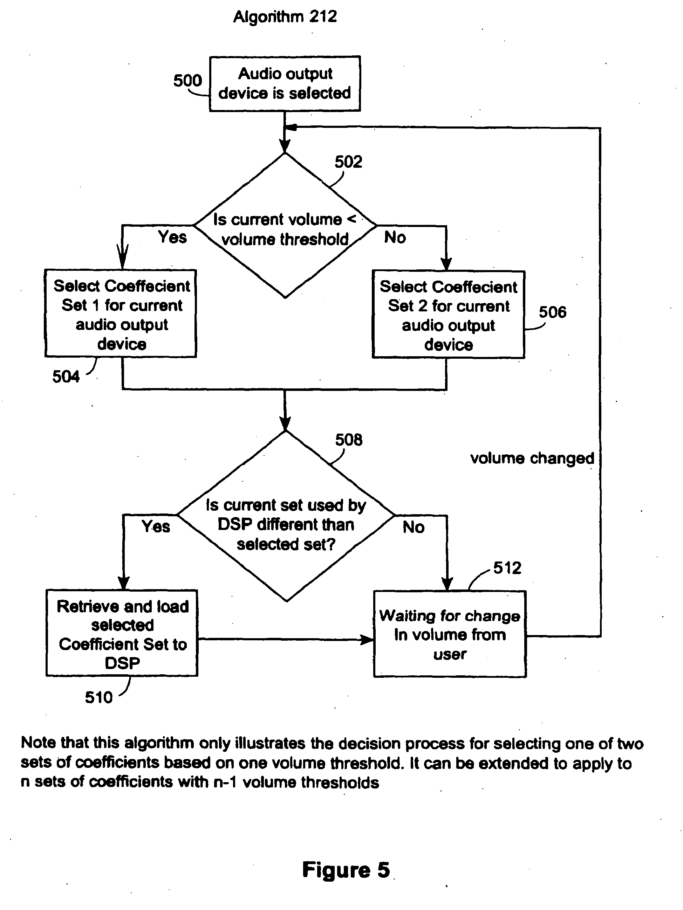

Referring to Fig. 5, when operating device 100, a user-selectable volume control is typically provided to ensure the loudness rating can be adjusted to account for the level of the incoming audio signal and the hearing capabilities of the user. This volume control is typically implemented in uniform steps; steps of 3 dB per change are common. Algorithm 212 controls operation of tonal adjustments made to a signal in view of a particular volume setting. First, at step 500, the audio output device is selected. At step 502, algorithm 212 determines the current volume setting for device 100 and compares it with a threshold. If the volume is below the threshold, algorithm 212 selects Set 1, per step 504. DSP 206 coordinates acceptance of the tap values and the incoming data values in data stream 218. However, per step 506, if algorithm 212 detects that the volume level exceeds the threshold, then Set 2 is selected. After either step 504 or 506, algorithm 212 goes to step 508 and checks whether the currently loaded Set of coefficients is different than the selected Set. If the currently loaded Set is different, then step 510 is executed and the selected Set (either Set 1 or 2) is retrieved from memory and provided to DSP 206. Thereafter, the operating cycles for DSP 206 generates the adjusted audio signal (in digital form). Thereafter, at step 512, device 100 waits for a change in volume levels. Upon detection of a change, algorithm 212 returns to step 502. It will be appreciated that each time a volume control is selected by a user for device 100, the volume level is used to determine which download filter coefficients are to be provided to DSP 206. In the embodiment, a volume setting of "7", (in a 0-10 scale where a volume setting of "5" is defined as nominal and each step provides a 3 dB volume steps), is selected as the threshold point. Other embodiments may use other volume steps or additional sets of coefficients for different volume levels. Other embodiments may use variations on the flow of operations, while still achieving signal shaping, from the algorithm noted above. Other embodiments may use more sets of coefficients.

It will be appreciated that the embodiment provides an effective and simple shaping routine for potentially distorted signals. Other embodiments may use other digital filters, such as an Infinite Impulse Response (IIR) filter, which are known in the art.

Although the embodiment provides adjustment for distortion control, other embodiments may be used to adjust for other settings. Such other settings include, without limitation: a signal boost for selected signals; volume adjustment; gain adjustment; a programmable gain amplifier (PGA) steps adjustment; side tone frequency adjustment; switching adjustments; specific frequency suppression adjustment; and adjustment for specific microphone parameters.

The above embodiment is useful for tuning speaker performance in production models of device 100. During production runs of device 100, different types of speakers 106 may be used in different manufacturing batches. Accordingly, for a given model of speaker 106, the above method may be used to determine one set of performance characteristics and a set of signal shaping parameters are provided for that model. When device 100 is built using that given model, the parameters for that model are used to attenuate the volume signals. However, when a second speaker model is used, then the method is used to determine its set of performance characteristics and signal shaping parameters. Accordingly, different adjustment parameters are provided to device 100 when that second speaker is used.

At a general level, the embodiment identifies a characteristic associated with an audio signal and identifies a quality threshold for the characteristic. Adjustment parameters are set for the signals. When the characteristic is exceeded, the DSP is provided with a set of parameters to reduce the unwanted factor associated with the signal to produce an adjusted signal where the unwanted factor is lessened. When the characteristic is not exceeded, the DSP is provided with another set of parameters which may not necessarily provide an output signal which needs to account for the unwanted factor.

At a more specific level, the embodiment monitors for a change in a volume level for a communication device. If the volume level is below a predetermined threshold, then DSP 206 is provided with a set of coefficients to shape the audio signal to conform with an audio frequency pass mask, such as the mask illustrated in Fig. 3. If the volume level exceeds the threshold, then there may be distortion in the signal. As such, the lower frequency signals in the signal are rolled-off in a preset fashion to reduce the amplitude of the lower frequency signals. This has the effect of lessening any distortion in the signal. However, the rolled-off signal has less loudness associated with it. As such, the signal is boosted in its higher frequencies in a preset fashion to compensate for the removed energy from the signal. The resulting rolled-off and boosted signal provides a signal which mimics a step-wise increase in volume (e.g. a 3dB increase in loudness).

It will be appreciated that in another embodiment, signals may be step-wise attenuated as volume levels are decreased with an appropriate modification to the signals to ensure compliance with a mask.

Although the invention has been described with reference to certain specific embodiments, various modifications thereof will be apparent to those skilled in the art without departing from the scope of the invention as outlined in the claims appended hereto.

**Claims**

1. A method of adjusting an output audio signal of a communication device (100), said method comprising performing the steps in said communication device of:

   obtaining a digitized signal (216) of a signal (214) received at said device, said received signal encoding an audio signal;
   monitoring for a request to increase a current volume setting to an increased volume level for said output audio signal (226); and
   generating an adjusted version (222) of said digitized signal (216) to implement said increased volume level utilizing a digital signal processor (DSP) (206); a processing filter (218) defined in said DSP; and said digitized signal;
   the method being **characterized in that** it comprises the steps of:

   upon determining that said increased volume level is within a predetermined quality threshold, generating an adjusted version of said digitized signal to implement said increased volume level utilizing a predetermined first set of adjustment parameters comprising filter coefficients for said DSP processing filter (218) stored in a memory (204) of said communication device (100);
   upon determining that said increased volume level would cause said output audio signal to exceed said predetermined quality threshold, generating an adjusted version of said digitized signal to have an acceptable characteristic for said quality threshold while implementing said increased volume level utilizing a predetermined second set of adjustment parameters comprising filter coefficients for said DSP processing filter (218) stored in said memory (204) of said communication device (100) that provides different output levels for said output audio signal at different frequencies as compared to said first set of adjustment parameters;
converting said adjusted version of said signal to an adjusted analog audio signal; and
providing said adjusted analog audio signal to a speaker in said device.

2. The method as claimed in claim 1, wherein:

said quality threshold is an upper boundary (302) of an audio frequency pass mask (302, 304);
said acceptable characteristic is a frequency response (308) within an acceptable boundary of said audio frequency pass mask;
said filter is a finite impulse response 'FIR' filter (218);
said first set of adjustment parameters is a first set of coefficients for said FIR filter; and
said second set of adjustment parameters is a second set of coefficients for said FIR filter.

3. The method as claimed in claim 2, wherein said second set of adjustment parameters provides a set of coefficients to adjust said audio signal to comply with said audio frequency pass mask (302, 304).

4. The method as claimed in any one of claims 1 to 3, wherein said second set of adjustment parameters provides a set of coefficients to adjust said audio signal to roll off lower frequency components in said audio signal.

5. The method as claimed in claim 4, wherein said second set of adjustment parameters provides a set of coefficients to further adjust said audio signal to boost higher frequency components in said audio signal.

6. The method as claimed in claim 1, wherein:

said quality threshold is a boundary associated with one of the following attributes in said audio signal:

a signal boost for selected signals;
gain adjustment;
side tone frequency adjustment;
switching adjustments;
signal suppression; and
adjustments for a microphone in said communication device;

said acceptable characteristic is a frequency response (308) within an acceptable boundary of an audio frequency pass mask (302, 304);
said filter is a finite impulse response 'FIR' filter (218);
said first set of adjustment parameters is a first set of coefficients for said FIR filter; and
said second set of adjustment parameters is a second set of coefficients for said FIR filter.

7. A circuit for adjusting an output audio signal of a communication device (100), said circuit (200) comprising:

a module (208) for receiving a signal (214) encoding an audio signal and converting said signal (214) to a digitized signal (216);
a module to accept a request for an increase in a current volume setting to an increased volume level for said output audio signal (226);
a microprocessor (202) adapted to detect when said request for said increase occurs and to generate an adjusted version (222) of digitized signal (216) to implement said increased volume level utilizing a digital signal processor (DSP) (206); a filter (218); and said digitized signal (216); and
a module (210) to convert said adjusted version (222) of the digitized signal (216) to an analog audio signal (224) and to provide said analog audio signal to a speaker (106);
the circuit being **characterized in that** said DSP (2006) is adapted to determine if said request for said increase at said increased volume level would generate an audio output signal (226) which exceeds a predetermined quality threshold, and,
upon determining that said increased volume is within said quality threshold, to select a first set of adjustment parameters comprising filter coefficients for said DSP processing filter (218) stored in a memory (204) of said communication device (100) to be used by said digital signal processor to generate an adjusted version (222) of said digitized signal (216) to implement said increased volume; and,

upon determining that said increased volume would cause said output audio signal to exceed said quality threshold, to select a second set of adjustment parameters comprising filter coefficients for said DSP processing filter (218) stored in said memory (204) of said communication device (100) to be used by said digital signal processor to generate another adjusted version of said digitized signal that provides different output levels for said digitized signal at different frequencies as compared to said adjusted version to have an acceptable characteristic for said quality threshold while implementing said increased volume.

8. The circuit as claimed in claim 7, wherein
said quality threshold is associated with an audio frequency pass mask (302, 304);
said acceptable characteristic is a frequency response (308) within an acceptable boundary of said audio frequency pass mask;
said filter is a finite impulse response 'FIR' filter (218);
said first set of adjustment parameters is a first set of coefficients for said FIR filter; and
said second set of adjustment parameters is a second set of coefficients for said FIR filter.

9. The circuit as claimed in claim 8, wherein said audio frequency pass mask (302, 304) is compliant with GSM standards.

10. The circuit as claimed in claim 9, wherein said second set of adjustment parameters comprises a set of coefficients to roll off lower frequency components in said audio signal.

11. The circuit as claimed in claim 10, wherein said second set of adjustment parameters further comprises a set of coefficients to boost higher frequency components in said audio signal.

12. The circuit as claimed in claim 7, wherein:

said quality threshold is a boundary associated with one of the following attributes relating to said audio signal:

a signal boost for selected signals;
gain adjustment;
side tone frequency adjustment;
switching adjustments;
signal suppression; and
adjustments for a microphone in said communication device;

said filter is a finite impulse response 'FIR' filter;
said first set of adjustment parameters is a first set of coefficients for said FIR filter; and
said second set of adjustment parameters is a second set of coefficients for said FIR filter.

13. A communications device comprising a circuit as claimed in any of claims 7 to 12.

14. A telecommunications network comprising a communications device as claimed in claim 13.

15. A machine readable medium comprising computer code means executable in a microprocessor (202) of a circuit (200) as claimed in any of claims 7 to 12 for implementing the method of any of claims 1 to 6.

**Patentansprüche**

1. Verfahren zur Einstellung eines Ausgabe-Audiosignals einer Kommunikationsvorrichtung (100), wobei das Verfahren das Ausführen folgender Schritte in der Kommunikationsvorrichtung umfasst:

Erhalten eines digitalisierten Signals (216) eines Signals (214), das an der Vorrichtung empfangen wurde, wobei das empfangene Signal ein Audiosignal codiert;
Überwachen auf eine Anfrage zur Erhöhung einer aktuellen Lautstärke-einstellung auf einen erhöhten Lautstärkepegel für das Ausgabe-Audiosignal (226); und
Erzeugen einer angepassten Version (222) des digitalisierten Signals (216), um den erhöhten Lautstärkepegel unter Verwendung eines digitalen Signalprozessors (DSP) (206), eines Verarbeitungsfilters (218), der in dem DSP definiert ist, und des digitalisierten Signals zu implementieren;

wobei das Verfahren **dadurch gekennzeichnet ist, dass** es folgende Schritte umfasst:

bei der Bestimmung, dass der erhöhte Lautstärkepegel innerhalb eines vorherbestimmten Qualitätsschwellenwerts liegt, Erzeugen einer angepassten Version des digitalisierten Signals, um den erhöhten Lautstärkepegel unter Verwendung eines vorherbestimmten ersten Satzes von Einstellparametern zu implementieren, der Filterkoeffizienten für den DSP-Verarbeitungsfilter (218) umfasst, die in einem Speicher (204) der Kommunikationsvorrichtung (100) gespeichert sind;

bei der Bestimmung, dass der erhöhte Lautstärkepegel verursachen würde, dass das Ausgabe-Audiosignal den vorherbestimmten Qualitätsschwellenwert überschreiten würde, Erzeugen einer angepassten Version des digitalisierten Signals, um eine akzeptable Kennlinie für den Qualitätsschwellenwert zu erhalten, während der erhöhte Lautstärkepegel unter Verwendung eines vorherbestimmten zweiten Satzes von Einstellparametern implementiert wird, der Filterkoeffizienten für den DSP-Verarbeitungsfilter (218) umfasst, die in dem Speicher (204) der Kommunikationsvorrichtung (100) gespeichert sind, und der, verglichen mit dem ersten Satz von Einstellparametern, andere Ausgabepegel mit anderen Frequenzen für das Ausgabe-Audiosignal bereitstellt;

Umwandeln der angepassten Version des Signals in ein angepasstes analoges Audiosignal; und

einem Lautsprecher in der Vorrichtung das angepasste analoge Audiosignal bereitstellen.

2. Verfahren nach Anspruch 1, wobei:

der Qualitätsschwellenwert eine obere Grenze (302) einer Audiofrequenzpassmaske (302, 304) ist;

die akzeptable Kennlinie eine Frequenzkennlinie (308) innerhalb einer akzeptablen Grenze der Audiofrequenzpassmaske ist;

der Filter ein finiter Impulskennlinienfilter, 'FIR'-Filter, (218) ist;

der erste Satz von Einstellparametern ein erster Satz von Koeffizienten für den FIR-Filter ist; und

der zweite Satz von Einstellparametern ein zweiter Satz von Koeffizienten für den FIR-Filter ist.

3. Verfahren nach Anspruch 2, wobei der zweite Satz von Einstellparametern einen Satz von Koeffizienten bereitstellt, um das Audiosignal so einzustellen, dass es mit der Audiofrequenzpassmaske (302, 304) übereinstimmt.

4. Verfahren nach einem der Ansprüche 1 bis 3, wobei der zweite Satz von Einstellparametern einen Satz von Koeffizienten bereitstellt, um das Audiosignal so einzustellen, dass niedrigere Frequenzkomponenten in dem Audiosignal beseitigt werden.

5. Verfahren nach Anspruch 4, wobei der zweite Satz von Einstellparametern einen Satz von Koeffizienten bereitstellt, um das Audiosignal des Weiteren so einzustellen, dass höhere Frequenzkomponenten in dem Audiosignal verstärkt werden.

6. Verfahren nach Anspruch 1, wobei:

der Qualitätsschwellenwert eine Grenze ist, die zu einem der folgenden Attribute in dem Audiosignal gehört:

eine Signalsverstärkung für ausgewählte Signale;
Verstärkungseinstellung;
Nebentonfrequenzeinstellung;
Umschaltanpassungen;
Signalunterdrückung; und
Einstellungen für ein Mikrofon in der Kommunikationsvorrichtung;

die akzeptable Kennlinie eine Frequenzkennlinie (308) innerhalb einer akzeptablen Grenze einer Audiofrequenzpassmaske (302, 304) ist;

der Filter ein finiter Impulskennlinienfilter, 'FIR'-Filter, (218) ist;

der erste Satz von Einstellparametern ein erster Satz von Koeffizienten für den FIR-Filter ist; und

der zweite Satz von Einstellparametern ein zweiter Satz von Koeffizienten für den FIR-Filter ist.

7. Schaltkreis zur Einstellung eines Ausgabe-Audiosignals einer Kommunikationsvorrichtung (100), wobei der Schaltkreis (200) Folgendes umfasst:

ein Modul (208) zum Empfangen eines Signals (214), das ein Audiosignal codiert, und zum Umwandeln des Signals (214) in ein digitalisiertes Signal (216);

ein Modul zum Akzeptieren einer Anfrage für eine Erhöhung einer aktuellen Lautstärkeeinstellung auf einen erhöhten Lautstärkepegel für das Ausgabe-Audiosignal (226);

einen Mikroprozessor (202), der dafür ausgelegt ist, zu erfassen, wann die Anfrage für die Erhöhung stattfindet, und eine angepasste Version (222) des digitalisierten Signals (216) zu erzeugen, um den erhöhten Lautstärkepegel unter Verwendung eines digitalen Signalprozessors (DSP) (206), eines Filters (218) und des digitalisierten Signals (216) zu implementieren; und

ein Modul (210), um die angepasste Version (222) des digitalisierten Signals (216) in ein analoges Audiosignal (224) umzuwandeln und einem Lautsprecher (106) das analoge Audiosignal bereitzustellen;

wobei der Schaltkreis **dadurch gekennzeichnet ist, dass** der DSP (206) dafür ausgelegt ist, zu bestimmen, ob die Anfrage für die Erhöhung des erhöhten Lautstärkepegels ein Audioausgabesignal (226) erzeugen würde, das einen vorherbestimmten Qualitätsschwellenwert überschreitet, und

bei der Bestimmung, dass die erhöhte Lautstärke innerhalb des Qualitätsschwellenwerts liegt, einen ersten Satz von Einstellparameter auszuwählen, der Filterkoeffizienten für den DSP-Verarbeitungsfilter (218) umfasst, die in einem Speicher (204) der Kommunikationsvorrichtung (100) gespeichert sind, um von dem digitalen Signalprozessor verwendet zu werden, um eine angepasste Version (222) des digitalisierten Signals (216) zu erzeugen, um die erhöhte Lautstärke zu implementieren; und

bei der Bestimmung, dass die erhöhte Lautstärke verursachen würde, dass das Ausgabe-Audiosignal den Qualitätsschwellenwert überschreiten würde, einen zweiten Satz von Einstellparametern auszuwählen, der Filterkoeffizienten für den DSP-Verarbeitungsfilter (218) umfasst, die in dem Speicher (204) der Kommunikationsvorrichtung (100) gespeichert sind, um von dem digitalen Signalprozessor verwendet zu werden, um eine andere angepasste Version des digitalisierten Signals zu erzeugen, das dem digitalisierten Signal, verglichen mit der angepassten Version, andere Ausgabepegel mit anderen Frequenzen bereitstellt, um eine akzeptable Kennlinie für den Qualitätsschwellenwert bereitzustellen, während die erhöhte Lautstärke implementiert wird.

8. Schaltkreis nach Anspruch 7, wobei
der Qualitätsschwellenwert zu einer Audiofrequenzpassmaske (302, 304) gehört; die akzeptable Kennlinie eine Frequenzkennlinie (308) innerhalb einer akzeptablen Grenze einer Audiofrequenzpassmaske (302, 304) ist;
der Filter ein finiter Impulskennlinienfilter, 'FIR'-Filter, (218) ist;
der erste Satz von Einstellparametern ein erster Satz von Koeffizienten für den FIR-Filter ist; und
der zweite Satz von Einstellparametern ein zweiter Satz von Koeffizienten für den FIR-Filter ist.

9. Schaltkreis nach Anspruch 8, wobei die Audiofrequenzpassmaske (302, 304) GSM-Standards entspricht.

10. Schaltkreis nach Anspruch 9, wobei der zweite Satz von Einstellparametern einen Satz von Koeffizienten umfasst, um niedrigere Frequenzkomponenten in dem Audiosignal zu beseitigen.

11. Schaltkreis nach Anspruch 10, wobei der zweite Satz von Einstellparametern des Weiteren einen Satz von Koeffizienten umfasst, um höhere Frequenzkomponenten in dem Audiosignal zu verstärken.

12. Schaltkreis nach Anspruch 7, wobei:

der Qualitätsschwellenwert eine Grenze ist, die zu einem der folgenden Attribute gehört, die das Audiosignal betreffen:

eine Signalsverstärkung für ausgewählte Signale;
Verstärkungseinstellung;
Nebentonfrequenzeinstellung;
Umschaltanpassungen;
Signalunterdrückung; und
Einstellungen für ein Mikrofon in der Kommunikationsvorrichtung;

der Filter ein finiter Impulskennlinienfilter, 'FIR'-Filter, (218) ist;
der erste Satz von Einstellparametern ein erster Satz von Koeffizienten für den FIR-Filter ist; und
der zweite Satz von Einstellparametern ein zweiter Satz von Koeffizienten für den FIR-Filter ist.

13. Kommunikationsvorrichtung, die einen Schaltkreis nach einem der Ansprüche 7 bis 12 umfasst.

**14.** Telekommunikationsnetz, das eine Kommunikationsvorrichtung nach Anspruch 13 umfasst.

**15.** Maschinenlesbares Medium, das Computercodemittel umfasst, das in einem Mikroprozessor (202) eines Schaltkreises (200) nach einem der Ansprüche 7 bis 12 zur Implementierung des Verfahrens nach einem der Ansprüche 1 bis 6 ausführbar ist.

## Revendications

**1.** Procédé d'ajustement d'un signal de sortie audio d'un dispositif de communication (100), ledit procédé comprenant la réalisation des étapes suivantes dans ledit dispositif de communication :

obtenir un signal numérisé (216) d'un signal (214) reçu au niveau dudit dispositif, ledit signal reçu codant un signal audio ;
surveiller la formulation d'une demande d'augmentation du réglage actuel du volume à un niveau de volume supérieur pour ledit signal de sortie audio (226) ; et
générer une version ajustée (222) dudit signal numérisé (216) afin d'appliquer ledit niveau de volume supérieur à l'aide d'un processeur de signal numérique (DSP) (206) ; un filtre de traitement (218) défini dans ledit DSP ; et ledit signal numérisé ;
le procédé étant **caractérisé en ce qu'**il comprend les étapes consistant à :

générer une version ajustée dudit signal numérisé lorsqu'il est déterminé que ledit niveau de volume supérieur se situe dans un seuil de qualité prédéterminé, afin d'appliquer ledit niveau de volume supérieur à l'aide d'un premier ensemble prédéterminé de paramètres d'ajustement comprenant des coefficients de filtrage pour ledit filtre de traitement du DSP (218) stocké dans une mémoire (204) dudit dispositif de communication (100) ;
générer une version ajustée dudit signal numérisé lorsqu'il est déterminé que ledit niveau de volume supérieur entraînerait un dépassement dudit seuil de qualité prédéterminé par ledit signal de sortie audio, afin d'obtenir une caractéristique acceptable pour ledit seuil de qualité tout en appliquant ledit niveau de volume supérieur à l'aide d'un second ensemble prédéterminé de paramètres d'ajustement comprenant des coefficients de filtrage pour ledit filtre de traitement du DSP (218) stocké dans ladite mémoire (204) dudit dispositif de communication (100) qui fournit différents niveaux de sortie pour ledit signal de sortie audio à différentes fréquences, comparé audit premier ensemble de paramètres d'ajustement ;
convertir ladite version ajustée dudit signal en un signal audio analogique ajusté ; et
fournir ledit signal audio analogique ajusté à un haut-parleur dans ledit dispositif.

**2.** Procédé selon la revendication 1, dans lequel :

ledit seuil de qualité est une limite supérieure (302) d'un cache de bande passante de fréquence audio (302, 304) ;
ladite caractéristique acceptable est une réponse de fréquence (308) comprise dans une limite acceptable dudit cache de bande passante de fréquence audio ;
ledit filtre est un filtre à réponse impulsionnelle finie « FIR » (218) ;
ledit premier ensemble de paramètres d'ajustement est un premier ensemble de coefficients pour ledit filtre FIR ; et
ledit second ensemble de paramètres d'ajustement est un second ensemble de coefficients pour ledit filtre FIR.

**3.** Procédé selon la revendication 2, dans lequel ledit second ensemble de paramètres d'ajustement fournit un ensemble de coefficients destinés à ajuster ledit signal audio afin de respecter ledit cache de bande passante de fréquence audio (302, 304).

**4.** Procédé selon l'une quelconque des revendications 1 à 3, dans lequel ledit second ensemble de paramètres d'ajustement fournit un ensemble de coefficients permettant d'ajuster ledit signal audio pour affaiblir les composants basse fréquence dans ledit signal audio.

**5.** Procédé selon la revendication 4, dans lequel ledit second ensemble de paramètres d'ajustement fournit un ensemble de coefficients permettant d'ajuster encore ledit signal audio pour amplifier les composants haute fréquence dans ledit signal audio.

**6.** Procédé selon la revendication 1, dans lequel :

ledit seuil de qualité est une limite associée à un des attributs suivants dans ledit signal audio :

l'amplification de signal pour des signaux sélectionnés ;
l'ajustement de gain ;
l'ajustement de la fréquence d'effet local ;
des ajustements de commutation ;
la suppression des signaux ; et
des ajustements pour un microphone dans ledit dispositif de communication ;

ladite caractéristique acceptable est une réponse de fréquence (308) comprise dans une limite acceptable d'un cache de bande passante de fréquence audio (302, 304) ;
ledit filtre est un filtre à réponse impulsionnelle finie « FIR » (218) ;
ledit premier ensemble de paramètres d'ajustement est un premier ensemble de coefficients pour ledit filtre FIR ; et
ledit second ensemble de paramètres d'ajustement est un second ensemble de coefficients pour ledit filtre FIR.

**7.** Circuit d'ajustement d'un signal de sortie audio d'un dispositif de communication (100), ledit circuit (200) comprenant :

un module (208) permettant de recevoir un signal (214) codant un signal audio et de convertir ledit signal (214) en un signal numérisé (216) ;
un module permettant d'accepter une demande d'augmentation du réglage de volume actuel à un niveau de volume supérieur pour ledit signal de sortie audio (226) ;
un microprocesseur (202) permettant de détecter quand ladite demande d'augmentation se produit et de générer une version ajustée (222) du signal numérisé (216) pour appliquer ledit niveau de volume supérieur à l'aide d'un processeur de signal numérique (DSP) (206) ; un filtre (218) ; et ledit signal numérisé (216) ; et
un module (210) permettant de convertir ladite version ajustée (222) du signal numérisé (216) en un signal audio analogique (224) et de fournir ledit signal audio analogique à un haut-parleur (106) ;

le circuit étant **caractérisé en ce que** ledit DSP (206) est conçu pour déterminer si ladite demande d'augmentation audit niveau de volume supérieur générerait un signal de sortie audio (226) dépassant un seuil de qualité prédéterminé ; et
lorsqu'il est déterminé que ledit volume supérieur est compris dans le seuil de qualité, pour sélectionner un premier ensemble de paramètres d'ajustement comprenant des coefficients de filtrage pour ledit filtre de traitement du DSP (218) stocké dans une mémoire (204) dudit dispositif de communication (100) devant être utilisé par ledit processeur de signal numérique pour générer une version ajustée (222) dudit signal numérisé (216) pour appliquer ledit volume supérieur ; et
lorsqu'il est déterminé que ledit volume supérieur entraînerait un dépassement dudit seuil de qualité par ledit signal audio de sortie, pour sélectionner un second ensemble de paramètres d'ajustement comprenant des coefficients de filtrage pour ledit filtre de traitement du DSP (218) stocké dans ladite mémoire (204) dudit dispositif de communication (100) devant être utilisé par ledit processeur de signal numérique pour générer une autre version ajustée dudit signal numérisé fournissant des niveaux de sortie différents pour ledit signal numérisé à des fréquences différentes comparés à ladite version ajustée afin d'obtenir une caractéristique acceptable pour ledit seuil de qualité lors de l'application dudit volume supérieur.

**8.** Circuit selon la revendication 7, dans lequel
ledit seuil de qualité est associé à un cache de bande passante de fréquence audio (302, 304) ;
ladite caractéristique acceptable est une réponse de fréquence (308) dans une limite acceptable dudit cache de bande passante de fréquence audio ;
ledit filtre est un filtre à réponse impulsionnelle finie « FIR » (218) ;
ledit premier ensemble de paramètres d'ajustement est un premier ensemble de coefficients pour ledit filtre FIR ; et
ledit second ensemble de paramètres d'ajustement est un second ensemble de coefficients pour ledit filtre FIR.

**9.** Circuit selon la revendication 8, dans lequel ledit cache de bande passante de fréquence audio (302, 304) est conforme aux normes GSM.

**10.** Circuit selon la revendication 9, dans lequel ledit second ensemble de paramètres d'ajustement comprend un ensemble de coefficients destinés à affaiblir les composants basse fréquence dans ledit signal audio.

11. Circuit selon la revendication 10, dans lequel ledit second ensemble de paramètres d'ajustement comprend un ensemble de coefficients destinés à amplifier les composants haute fréquence dans ledit signal audio.

12. Circuit selon la revendication 7, dans lequel :

ledit seuil de qualité est une limite associée à un des attributs suivants concernant ledit signal audio :

l'amplification de signal pour des signaux sélectionnés ;
l'ajustement de gain ;
l'ajustement de la fréquence d'effet local ;
des ajustements de commutation ;
la suppression des signaux ; et
des ajustements pour un microphone dans ledit dispositif de communication ;

ledit filtre est un filtre à réponse impulsionnelle finie « FIR » ;
ledit premier ensemble de paramètres d'ajustement est un premier ensemble de coefficients pour ledit filtre FIR ; et
ledit second ensemble de paramètres d'ajustement est un second ensemble de coefficients pour ledit filtre FIR.

13. Dispositif de communication comprenant un circuit selon l'une quelconque des revendications 7 à 12.

14. Réseau de télécommunication comprenant un dispositif de communication selon la revendication 13.

15. Support lisible par ordinateur comprenant un moyen de codage informatique exécutable dans un microprocesseur (202) d'un circuit (200) selon l'une quelconque des revendications 7 à 12 pour mettre en oeuvre le procédé selon l'une quelconque des revendications 1 à 6.

**Figure 1**

**Figure 2**

Figure 3

Figure 4

Algorithm 212

```
        ┌─────────────────┐
   500  │  Audio output   │
        │ device is selected│
        └────────┬────────┘
                 │
                 ▼
              ╱     ╲    502
            ╱  Is current ╲
     Yes  ╱   volume <      ╲  No
    ◄────╱ volume threshold ╲────►
         ╲                  ╱
           ╲              ╱
             ╲          ╱
               ╲      ╱
    ┌──────────────┐    ┌──────────────┐
    │Select Coeffecient│  │Select Coeffecient│
    │Set 1 for current │  │Set 2 for current │  506
    │  audio output    │  │  audio output    │
    │     device       │  │     device       │
    └────────┬─────────┘  └────────┬─────────┘
      504                          │
                 ◄─────────────────┘
                 ▼
              ╱     ╲    508
            ╱ Is current ╲
     Yes  ╱  set used by   ╲  No
    ◄────╱ DSP different than╲────►    volume changed
         ╲  selected set?   ╱
           ╲              ╱
             ╲          ╱
    ┌──────────────┐    ┌──────────────┐  512
    │Retrieve and load│  │Waiting for change│
    │    selected     │──►│ In volume from  │
    │Coefficient Set to│  │      user       │
    │      DSP        │  │                 │
    └────────┬────────┘  └─────────────────┘
      510
```

Note that this algorithm only illustrates the decision process for selecting one of two sets of coefficients based on one volume threshold. It can be extended to apply to n sets of coefficients with n-1 volume thresholds

# Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0767570 A
- US 4721923 A

- WO 2004004409 A